# EUROPÄISCHE PATENTSCHRIFT

(11) **EP 1 598 924 B1**
(45) Veröffentlichungstag und Bekanntmachung des Hinweises auf die Patenterteilung: **22.04.2015**
(21) Anmeldenummer: 05106885.6
(22) Anmeldetag: 27.10.1999
(51) Int. Cl.: H02M 1/12

(54) **Wechselrichter ohne Oberschwingungen**
Inverter without harmonics
Ondueur sans harmoniques

(30) Priorität: 25.02.1999 DE 19908124
(43) Veröffentlichungstag der Anmeldung: 23.11.2005
(62) Teilanmeldung aus: 99950783.3
(73) Patentinhaber: Wobben Properties GmbH, 26605 Aurich (DE)
(72) Erfinder: Wobben, Aloys, 26607 Aurich (DE)
(74) Vertreter: Eisenführ Speiser

(56) Entgegenhaltungen:
- EP-A- 0 598 465
- EP-A- 0 758 161
- WO-A-94/18683
- DE-U- 29 506 951
- US-A- 4 677 401
- US-A- 5 499 178
- US-A- 5 513 090
- US-A- 5 661 390
- US-A- 5 831 842

## Beschreibung

Die Erfindung betrifft einen Wechselrichter bzw. ein Ausgangsfilter für Wechselrichter. Der Ausgangsstrom eines Wechselrichters für höhere Leistungen weist in der Regel eine ganze Reihe von Stromoberschwingungen auf. Diese Oberschwingungen sind störend und besonders wenn größere Leistung über Wechselrichter in ein Netz eingespeist werden müssen, treten sie unangenehm auf.

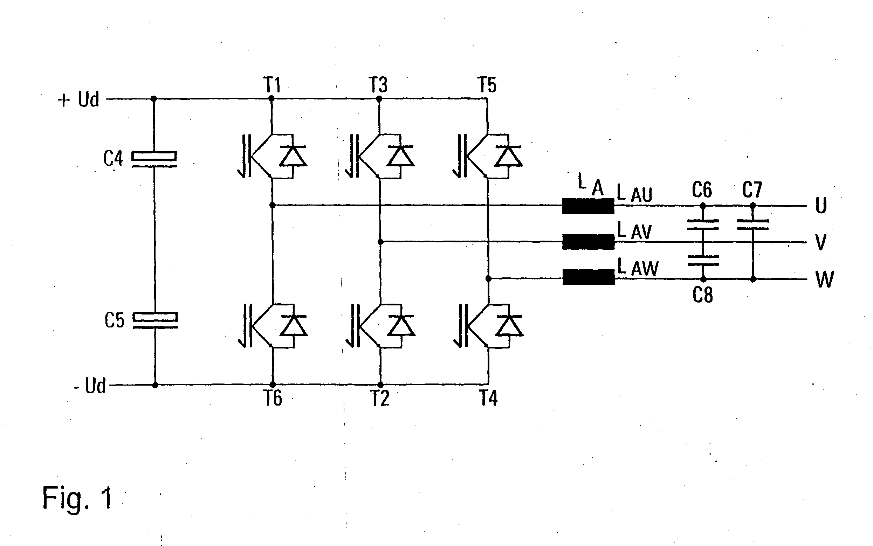

In Figur 1 ist ein Wechselrichter mit einer Ausgangsdrossel und einem Kondensatorfilternetzwerk gezeigt, der den vorbeschriebenen technischen Nachteil von Wechselrichtern deutlich verkleinert und die Stromqualität erheblich verbessert. Die Leistungsschalter T1 bis T6 und die hierzu parallel geschalteten Dioden werden mittels einer Pulsweitenmodulation der Leistungsschalter so geschaltet, dass am Ausgang des Wechselrichters drei sinusförmige Ausgangsströme-Phasen U, V, W entstehen. Die Form des Ausgangsstromes wird durch gezieltes Ein- bzw. Ausschalten der einzelnen Schalter T1 - T6 einer Sinusschwingung angenähert. Dabei entstehen jedoch durch die zwangsläufigen Abweichungen vom Sollwert die genannten Oberschwingungen.

Diese erzeugten Oberschwingungen sind im Dreiphasennetz in jedem Augenblick in der Summe gleich null. Dies ist in jedem Fall so, weil keine anderen Stromwege (andere elektrische Kreise) vorhanden sind. Es entstehen dabei nur symmetrische Oberschwingungen. Durch Filterkreise - wie auch in Figur 1 ausgangsseitig dargestellt - wird dann versucht, diese Oberschwingungen zu kompensieren. Da das elektrische Netz durch die induktiven und kapazitiven Beläge (Komponenten der Übertragungsleitung) ebenfalls teilweise für bestimmte Frequenzen sehr niedrige Impedanzen (Widerstände) aufweist, fließen nach wie vor unerwünscht hohe Anteile der Oberschwingungen in das öffentliche Versorgungsnetz.

Aus dem Dokument 5,661,390 A ist ein umrichtergespeister Motorantrieb mit einer ausgangsseitigen Saugkreisanordnung zur Reduktion entstehender elektromagnetischer Interferenzen bekannt.

Aus dem Dokument EP 0 758 161 A2 ist ein weiterer umrichtergespeister Motorantrieb bekannt, bei dem leitungsgeführte Störaussendungen unterdrückt werden.

Aus dem Dokument US 5,831,842 A ist eine Vorrichtung zur aktiven Gleichtaktunterdrückung bekannt, die Störungen, die durch schrittweise Änderungen einer Gleichtaktspannung, die beim Umschalten eines Leistungshalbleitergeräts eines Leistungswandlers erzeugt wird, entstehen, beseitigt.

Es ist Aufgabe der Erfindung, die im Stand der Technik genannten Nachteile zu beseitigen, so dass in das öffentliche Versorgungsnetz nur noch Strom mit sehr kleinen, wenn möglich gar keinen, Oberschwingungen eingespeist wird. Darüber hinaus soll der Gleichspannungszwischenkreis des Wechselrichters im elektrischen Potential (Spannungswert zum Gehäuse, Erde bzw. zum Drehstromsystem) stabilisiert werden.

Zur Lösung der gestellten Aufgabe wird erfindungsgemäß ein Wechselrichter mit den Merkmalen nach Anspruch 1 vorgeschlagen. Vorteilhafte Weiterbildungen sind in den Unteransprüchen beschrieben.

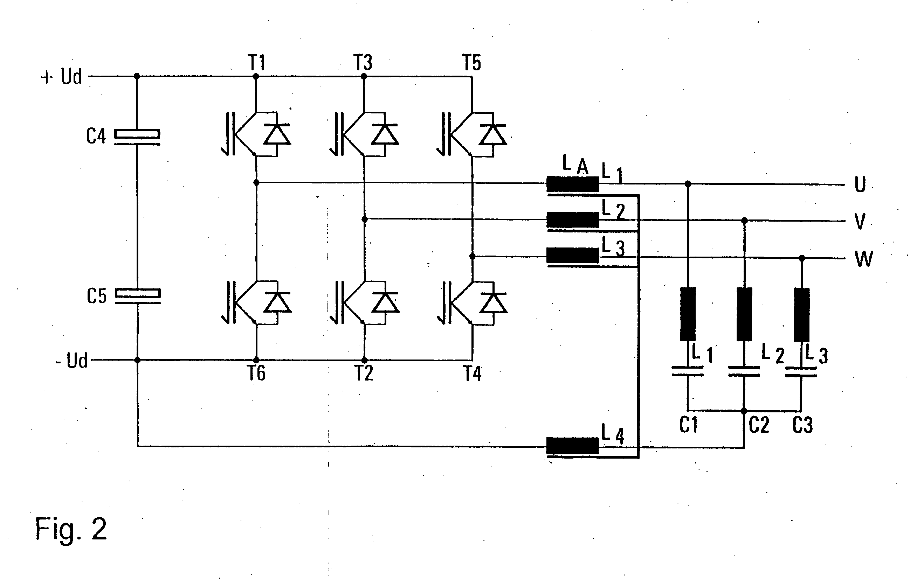

Mit dem erfindungsgemäßen Wechselrichter werden unsymmetrische Oberschwingungen, Wechselrichter ausgangsseitig erzeugt und in den Gleichstromzwischenkreis zurückgeführt. Zur Erzeugung der unsymmetrischen Oberschwingungen wird zusätzlich zu der am Wechselrichterausgang vorhandenen Drehstromausgangsdrossel eine weitere Wicklung vorgesehen (vierter Schenkel). Diese weitere Wicklung überträgt unsymmetrische Magnetflüsse, die aus den unsymmetrischen Oberschwingungen entstehen. Die Oberschwingungen werden über drei Schwingkreise, beispielsweise drei LC-Glieder, gesammelt. Symmetrische Oberschwingungen werden, falls überhaupt noch vorhanden, mit diesen Schwingkreisen direkt kompensiert. Die unsymmetrischen Oberschwingurigen (Σi ≠ 0) werden zum Gleichspannungszwischenkreis zurückgeführt. Die Summe der unsymmetri-schen Oberschwingungen wird am Sternpunkt der Schwingkreise (der Filterkondensatoren der Schwingkreise) abgegriffen und über eine Wicklung am vierten Schenkel in die Minusschiene des Gleichspannungszwischenkreises geführt bzw. eingekoppelt. Damit ergibt sich ein geschlossener "Oberschwingungsstromkreislauf', der in Figur 2 zeichnerisch dargestellt ist.

Der Summenstrom der unsymmetrischen Oberschwingungen, der am Sternpunkt der Schwingkreise abgegriffen wird, erzeugt im vierten Schenkel der Ausgangsdrossel magnetische Flüsse. Diese magnetischen Flüsse fließen, abhängig von der aktuellen Situation, in die drei Hauptschenkel der Ausgangsdrossel zurück und unterstützen damit die Ausgangsinduktivität. Als Ergebnis stellt sich eine um ca. 5% bis 20% höhere Ausgangsinduktivität als bei einer gewöhnlichen Dreiphasendrossel ein. Da in der vierten Wicklung nur der Oberschwingungsstrom fließt, entstehen hierbei - in Relation zu den Hauptspulen der Drossel - nur sehr kleine Kupferverluste.

Die Erfindung und zweckmäßige Weiterbildungen sowie ihre Vorteile sind in der nachfolgenden Zeichnungsbeschreibung beispielhaft erläutert. Es zeigen:
- Fig. 1: ein Prinzipschaltbild eines bekannten Wechselrichters;
- Fig. 2: ein Prinzipschaltbild eines erfindungsgemäßen Wechselrichters;
- Fig. 3: ein Messdiagramm eines erfindungsgemäßen Wechselrichters;
- Fig. 4: einen Ausschnitt aus Figur 3 mit vergrößerter Auflösung;
- Fig. 5: ein Messdiagramm eines erfindungsgemäßen Wechselrichters;
- Fig. 6: ein Messdiagramm eines erfindungsgemäßen Wechselrichters;
- Fig.7: ein Schaltbild einer bevorzugten Ausführungsform eines erfindungsgemäßen Wechselrichters;
- Fig. 8: ein Strommessdiagramm für den Wechselrichter und Netzstrom.

Figur 1 zeigt das Schaltbild eines bekannten Wechselrichters, welcher durch die Antiparallelschaltung der Leistungsschalter T1 bis T6 mit jeweils einer Diode D1-D6 einen Vierquadrantenbetrieb ermöglicht und somit als Schaltung sehr vielseitig einsetzbar ist. Zur Erzeugung der positiven Halbwelle des Ausgangsstroms wird bei dem bekannten Wechselrichter eine aufeinanderfolgende Ein- und Ausschaltung der Schalter Tn (n= 1, 3, 5) und Tn+1 (n=2, 4, 6) vorgenommen. Für eine Halbwelle des Ausgangsstroms der U-Phase des Drehstroms bedeutet dies, dass mehrmals während einer Halbwelle aufeinanderfolgend T1 und T6 an- bzw. ausgeschaltet werden. Den Leistungsschaltern ist ein Gleichspannungszwischenkreis mit zwei in Reihe geschalteten Elektrolyt-Kondensatoren C4 und C5 zur Einspeisung der Gleichspannung + Ud und - Ud vorgeschaltet. Ausgangsseitig weist der Wechselrichter eine Ausgangsdrossel LA (LAU, LAV, LAW) sowie einen nachgeschalteten Filter, bestehend aus drei Kondensatoren C6, C7, C8, die zwischen den jeweiligen Phasen angeordnet sind, auf. Wie bereits beschrieben, wird die Form des dreiphasigen Ausgangsstroms U, V, W durch ein gezieltes Ein- und Ausschalten der einzelnen Leistungsschalter T1 bis T6 einer Sinusschwingung angenähert. Dabei entstehen jedoch durch die zwangsläufigen Abweichungen vom Sollwert Oberschwingungen. Diese erzeugten Oberschwingungen sind im Dreiphasennetz in jedem Augenblick in ihrer Summe gleich oder nahezu null. Dies ist so, weil keine anderen Stromwege vorhanden sind. Die auftretenden Oberschwingungen sind jedoch stets symmetrisch und durch den Kondensatorfilterkreis wird versucht, diese Oberschwingungen zu kompensieren. Da aber das elektrische Netz durch die induktiven und kapazitiven Beläge (Komponenten der Übertragungsleitung) ebenfalls teilweise für bestimmte Frequenzen sehr niedrige Impedanzen (Widerstände) aufweist, fließen nach wie vor hohe Anteile der Oberschwingungen in das öffentliche Versorgungsnetz, was sehr unerwünscht ist.

Figur 2 zeigt das Schaltbild eines erfindungsgemäßen Wechselrichters. Dieser weist wie der bekannte Wechselrichter einen Gleichspannungszwischenkreis, Leistungsschalter T1 - T6 und hierzu parallel geschaltete Dioden D1 - D6 sowie eine Ausgangsdrossel LA auf.

Der erfindungsgemäße Wechselrichter erzeugt unsymmetrische Oberschwingungen. Hierzu ist eine zusätzliche Wicklung L4 (zusätzlicher Schenkel) vorgesehen. 1 Dieser vierte Schenkel L4 überträgt die unsymmetrischen Magnetflüsse, die aus den unsymmetrischen Oberschwingungen entstehen. Die Oberschwingungen werden über drei Schwingkreise LC bzw. drei L-C-Glieder, bestehend aus den Induktivitäten L1 bis L3 sowie den Kondensatoren C1 bis C3 und einem gemeinsamen Sternpunkt. Symmetrische Oberschwingungen werden mit diesen Schwingkreisen LC, soweit sie noch vorhanden sind, direkt kompensiert. Unsymmetrische Oberschwingungen L4 (ΣI ≠ 0) werden über den Sternpunkt der Wicklung des vierten Schenkels L4 zugeführt. Diese vierte Wicklung L4 ist mit der Minusschiene des Gleichspannungszwischenkreises verbunden. Die Summe der unsymmetrischen Oberschwingungen wird somit am Sternpunkt der Filterkondensatoren abgegriffen und über die Wicklung am vierten Schenkel L4 in den Gleichspannungszwischenkreis eingekoppelt. Hiermit ergibt sich ein geschlossener Oberschwingungsstromkreislauf für die unsymmetrischen Oberschwingungen.

Der Summenstrom der unsymmetrischen Oberschwingungen der am Sternpunkt der Kondensatoren abgegriffen wird, erzeugt am vierten Schenkel der Ausgangsdrossel LA magnetische Flüsse. Diese magnetischen Flüsse fließen, LA abhängig von der jeweiligen Situation, in die mit dem vierten Schenkel magnetisch gekoppelten Hauptschenkel der Ausgangsdrossel LA zurück und unterstützen deren Ausgangsinduktivität.

Als Ergebnis hieraus erhält man eine um ca. 5-20% höhere Ausgangsinduktivität LA als bei einer gewöhnlichen Dreiphasendrossel. Da in der vierten Wicklung LA4 nur der Oberschwingungsstrom der unsymmetrischen Oberschwingungen fließt, entstehen hierbei nur sehr kleine Kupferverluste, verglichen zu denen in den Hauptspulen LA1, LA2, LA3.

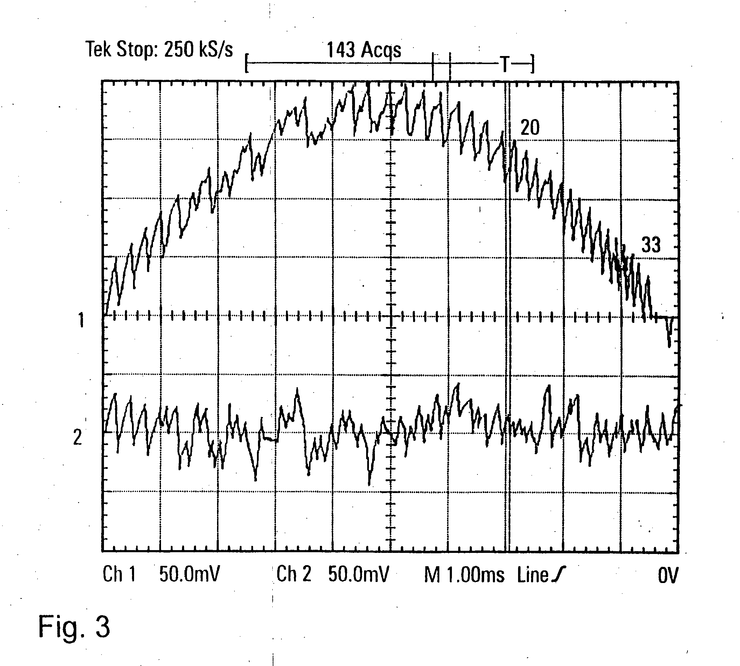

Figur 3 zeigt ein Messdiagramm des Wechselrichters nach Figur 2. Die obere Kurve zeigt die positive Sinushalbschwingung des Stromes am Wechselrichterausgang. In diesem Fall ist die Hysterese des Stromes konstant und die Schaltfrequenz variabel. Die untere Kurve zeigt die Summe der Oberschwingungen der drei Ausgangsphasen des Wechselrichters, die über den vierten Schenkel in den Gleichspannungszwischenkreis zurückfließen.

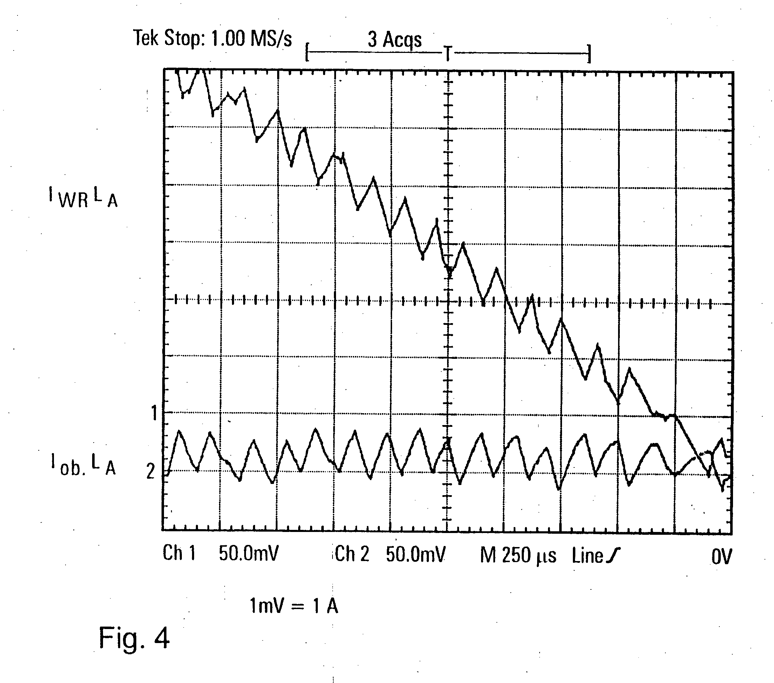

Figur 4 zeigt nochmals einen Teil des Ausgangsstromes des Wechselrichters der Phase 1 in höherer Auflösung. Hierbei sind deutlich die dreieckförmigen Oberschwingungen des Ausgangsstromes IWR LA zu erkennen.

Mit dem Schwingkreis, bestehend aus L1 und C1, werden diese Oberschwingungen am Ausgang der Ausgangsinduktivität LA von der (Sinus-) Grundschwingung des Ausgangsstromes getrennt. Die untere Kurve in Figur 4 zeigt den zeitlichen Verlauf des Stromes IL1C1 in L1 und C1.

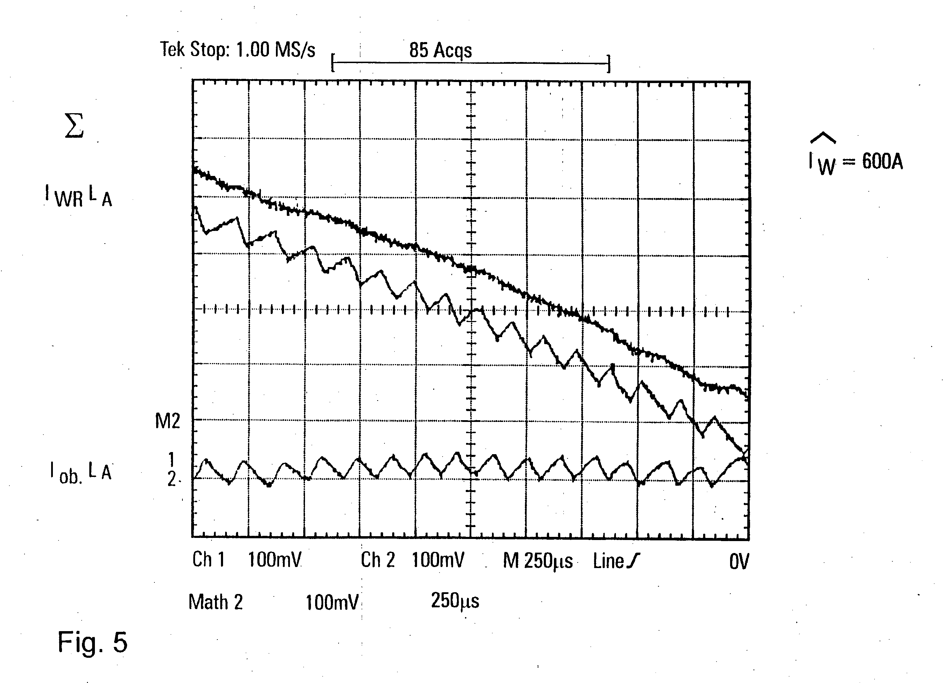

Figur 5 zeigt das Ergebnis der Trennung der Oberschwingungen vom Hauptstrom (Grundschwingung 50 Hz). Die oberste Kurve zeigt den Ausgangsstrom ohne Oberschwingungen. Dieses sehr gute Ergebnis ist nur mit dem erfindungsgemäßen Oberschwingungskreislauf möglich. Dabei werden, wie in den Figuren zu erkennen, die erzeugten Oberschwingungen vom Wechselrichter nahezu zu 100% in den Gleichspannungszwischenkreis zurückgeführt. Die mittlere Kurve in Figur 5 zeigt den Wechselrichterstrom IWR LA und die untere Kurve in Figur 5 zeigt nochmals den dazugehörigen Oberschwingungsstrom.

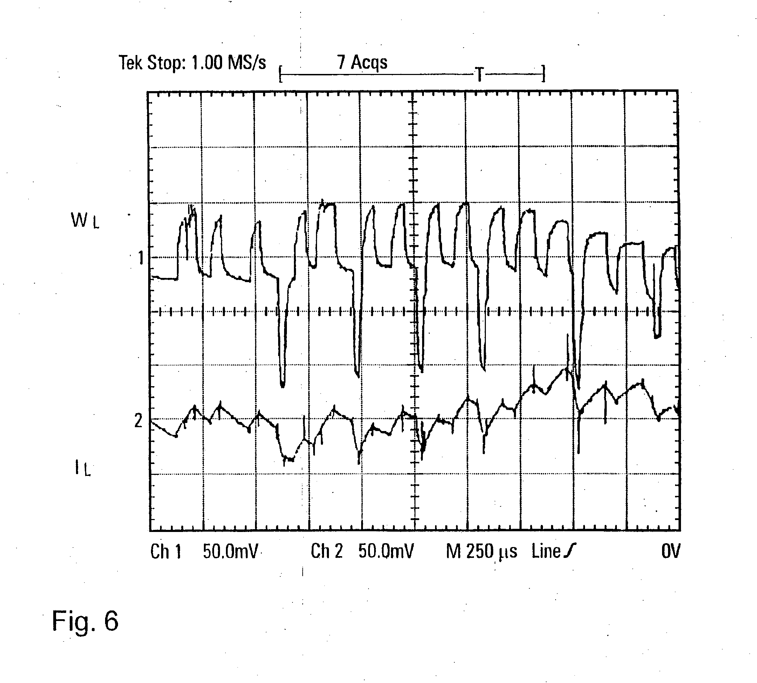

Figur 6 (untere Kurve) zeigt die Summe der drei Oberschwingungsströme I21, I22 und I23. Dieser Strom, der fast alle Oberschwingungen der drei Phasen beinhaltet, wird nun nochmals genutzt, um die Wirkung der Ausgangsdrossel LA zu erhöhen. Diese Drossel besteht, wie bereits beschrieben, aus den drei Hauptschenkeln LA1, LA2, LA3 für die drei Hauptausgangswicklungen und einem vierten kleinen Tochterschenkel, der nur für die Oberschwingungen vorgesehen ist. Dieser vierte Schenkel führt nur die magnetischen Flüsse, die der Summe der Oberschwingungen entsprechen. Die entsprechende Amplitude dieses Summenstromes der Oberschwingungen ist in Figur 6, untere Kurve dargestellt. Die obere Kurve zeigt den entsprechenden Spannungsverlauf hierzu. Um dies zu erreichen, ist ein Eisenquerschnitt von ca. 20% der Hauptschenkel für den vierten Schenkel ausreichend. Der vierte Schenkel erhöht aber die wirkende Ausgangsinduktivität LA um ca. 5-20%. Hieraus resultiert eine kleinere Baugröße der Ausgangsdrossel LA und ein besserer Wirkungsgrad.

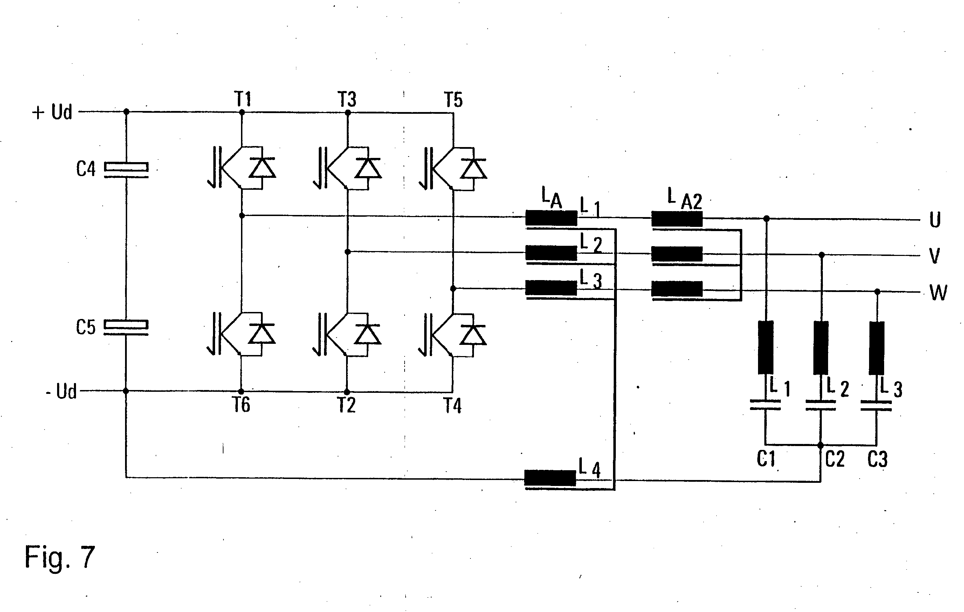

Figur 7 zeigt eine Weiterbildung des erfindungsgemäßen Wechselrichters. Die Ausgangsdrossel ist hierbei zweiteilig aufgebaut und besteht aus einer Vierschenkeldrossel und einer hierzu in Reihe geschalteten kompensierten Dreiphasendrossel LA2. Für unsymmetrische Oberschwingungsströme können vorteilhaft stromkompensierte Drosseln eingesetzt werden. Da die Summe des Netzstromes (Dreiphasenstrom) gleich null ist, wird die Drossel nicht mit den sehr hohen Grundschwingungen belastet (vormagnetisiert). Somit kann mit wenig Aufwand eine hohe Induktivität aufgebaut werden.

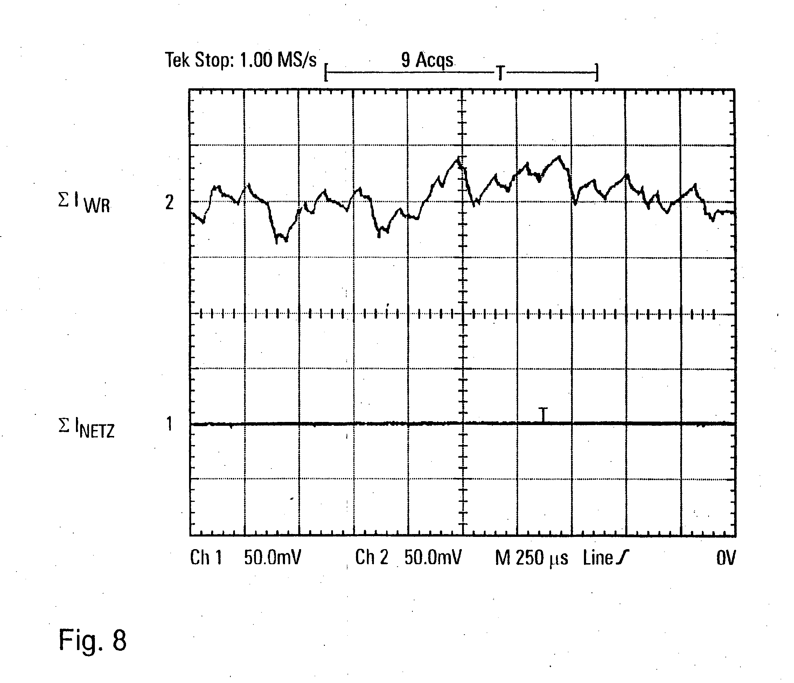

Figur 8, obere Kurve, zeigt die Summe der drei Ausgangsströme am Wechselrichterausgang vor dem Filter. Die maximale Amplitude beträgt hierbei nur 10% des Spitzenwertes eines Phasenstromes. Die untere Kurve zeigt die Summe der Ausgangsströme nach dem Filter. Wie zu sehen, ist dieser Ausgangsstrom von ausgezeichnet hoher Qualität und koppelt keine negativen Oberschwingungen in das Netz ein.

Der Gleichspannungszwischenkreis wird mit dem geschlossenen Oberschwingungskreis auch gleichzeitig stabilisiert. Der Sternpunkt der drei Kondensatoren hat ein ruhendes, im Prinzip das gleiche Potential wie Erde. Da dieser Punkt statisch über die Induktivität mit dem Zwischenkreis verbunden ist, fließt hierüber ein Ausgleichsstrom, wenn das Potential des Zwischenkreises sich ändert. Springende Potentiale sind für Generatoren, die in den Gleichspannungszwischenkreis einspeisen, schädlich, da durch Spannungsänderungen (dU/dt) ein kapazitiver Strom durch die Isolation fließen würde und langfristig Isolationsschäden verursacht.

Bevorzugt werden ein erfindungsgemäßer Wechselrichter in einem elektrische Energie erzeugenden System, beispielsweise eine Windkraftanlage, eingesetzt. Solche elektrische Energie erzeugende Systeme versorgen dann das Netz mit einem Strom höchster Qualität, was auch zur Folge hat, dass der jeweilige Netzbetreiber weniger Maßnahmen zur Stromqualitätssicherung vornehmen muss.

## Patentansprüche

1. Wechselrichter zur Erzeugung eines Wechsel- oder Drehstromes aus einer Gleichspannung mit
- einem Gleichspannungszwischenkreis und
- ausgangsseitig einer Ausgangsdrossel (LA),
**gekennzeichnet durch**
- drei Schwingkreisen (LC), bestehend aus den Induktivitäten L1 bis L3 sowie den Kondensatoren C1 bis C3 und einem gemeinsamen Sternpunkt, um ausgangsseitig auftretende symmetrische Oberschwingungen zu kompensieren;
- eine zusätzliche Wicklung, welche über eine direkte Leitung zwischen dem Sternpunkt und dem Gleichspannungszwischenkreis verbunden ist, um ausgangsseitig auftretende unsymmetrische Oberschwingungen in den Gleichspannungszwischenkreis einzukoppeln.

2. Wechselrichter nach Anspruch 1,
**dadurch gekennzeichnet, dass** mit dem Wechselrichter ein Wechsel- oder Drehstrom über M-Leitungen ausgegeben wird, wobei die M-Leitungen durch die Schwingkreise miteinander gekoppelt sind.

3. Wechselrichter nach Anspruch 1,
**dadurch gekennzeichnet, dass** die Ausgangsdrossel unsymmetrische Magnetflüsse, die aus den unsymmetrischen Oberschwingungen entstehen, überträgt.

4. Wechselrichter nach Anspruch 3,
**dadurch gekennzeichnet, dass** die Ausgangsdrossel aus m + 1 Schenkeln besteht, wobei m eine natürliche Zahl ist, wobei jeder Drehstromphase ein Schenkel zugeordnet ist und mittels des m + ersten Schenkel die unsymmetrischen Magnetflüsse, die aus den unsymmetrischen Oberschwingungen entstehen, übertragen werden.

5. Wechselrichter nach einem der vorhergehenden Ansprüche,
**dadurch gekennzeichnet, dass** die m + 1 Schenkel miteinander magnetisch gekoppelt sind und magnetische Flüsse, die im m + 1 Schenkel auftreten, in die m Schenkel der Ausgangsdrossel zurückfließen.

6. Wechselrichter nach einem der vorhergehenden Ansprüche,
**dadurch gekennzeichnet, dass** der m + 1 Schenkel nur von Oberschwingungsstrom durchflossen wird.

7. Wechselrichter nach einem der vorhergehenden Ansprüche,
**dadurch gekennzeichnet, dass** die Ausgangsdrossel eine stromkompensierte Drossel ist.

8. Wechselrichter nach einem der vorhergehenden Ansprüche, bei dem die Ausgangsdrossel aus einer Vierschenkeldrossel und eine in Reihe geschaltete Dreiphasendrossel besteht.

9. Wechselrichter nach einem der vorhergehenden Ansprüche,
**dadurch gekennzeichnet, dass** der Gleichspannungszwischenkreis mit dem geschlossenen Oberschwingungskreis stabilisiert wird.

10. Elektrische Energie erzeugendes System, nämlich Windenergieanlage mit einem Wechselrichter zur Erzeugung eines Wechsel- oder Drehstromes nach einem der vorhergehenden Ansprüche.

## Claims

1. An inverter for producing an alternating or three-phase current from a direct-current voltage with
- a d.c. voltage intermediate circuit and,
- on an output side, an output inductor (LA),
**characterized by**
- three resonant circuits (LC), comprising the inductances L1 to L3 and the capacitors C1 to C3, and a common star point, to compensate for symmetrical harmonic oscillations which occur on the output side;
- an additional winding which is connected by way of a direct line between the star point and the d.c. voltage intermediate circuit, to couple asymmetrical harmonic oscillations, which occur on the output side, into the d.c. voltage intermediate circuit.

2. An inverter according to Claim 1,
**characterized in that** an alternating or three-phase current is delivered by the inverter by way of M lines, wherein the M lines are coupled to one another by the resonant circuits.

3. An inverter according to Claim 1,
**characterized in that** the output inductor transmits asymmetrical magnetic fluxes which are formed from the asymmetrical harmonic oscillations.

4. An inverter according to Claim 3,
**characterized in that** the output inductor comprises m + 1 legs, wherein m is a natural number, wherein each three-phase current phase is assigned a leg and the asymmetrical magnetic fluxes which arise out of the asymmetrical harmonics are transmitted by means of the m + first leg.

5. An inverter according to any one of the preceding Claims,
**characterized in that** the m + 1 legs are coupled to one another magnetically, and magnetic fluxes which occur in the m + 1 leg flow back into the m legs of the output inductor.

6. An inverter according to any one of the preceding Claims,
**characterized in that** the m + 1 leg has only harmonic current flowing through it.

7. An inverter according to any one of the preceding Claims,
**characterized in that** the output inductor is a current-compensated inductor.

8. An inverter according to any one of the preceding Claims, in which the output inductor comprises a four-leg inductor and a three-phase inductor connected in series.

9. An inverter according to any one of the preceding Claims,
**characterized in that** the d.c. voltage intermediate circuit is stabilized with the closed harmonic circuit.

10. A system for generating electrical energy, namely a wind-energy installation with an inverter for producing an alternating or three-phase current according to any one of the preceding Claims.

## Revendications

1. Onduleur servant à produire un courant alternatif ou triphasé à partir d'une tension continue, comprenant
- un circuit intermédiaire de tension continue et
- côté sortie, une bobine de choc de sortie (LA), **caractérisé par**
- trois circuits oscillants (LC), constitués des inductances L1 à L3 ainsi que des condensateurs C1 à C3 et d'un point neutre commun afin de compenser des harmoniques symétriques apparaissant côté sortie,
- un enroulement supplémentaire, qui est raccordé par l'intermédiaire d'une ligne directe entre le point neutre et le circuit intermédiaire de tension continue afin d'injecter dans le circuit intermédiaire de tension continue des harmoniques non symétriques apparaissant côté sortie.

2. Onduleur selon la revendication 1,
**caractérisé en ce qu'**un courant alternatif ou triphasé est délivré à l'aide de l'onduleur par l'intermédiaire de lignes M, sachant que les lignes M sont couplées les unes aux autres par les circuits oscillants.

3. Onduleur selon la revendication 1,
**caractérisé en ce que** la bobine de choc de sortie transmet des flux magnétiques non symétriques, qui se forment à partir des harmoniques non symétriques.

4. Onduleur selon la revendication 3,
**caractérisé en ce que** la bobine de choc de sortie est constituée de m + 1 branches, sachant que m est un nombre naturel, sachant qu'une branche est associée à chaque phase de courant triphasé et que les flux magnétiques non symétriques, qui se forment à partir des harmoniques non symétriques, sont transmis au moyen de la première branche m +.

5. Onduleur selon l'une quelconque des revendications précédentes,
**caractérisé en ce que** les m + 1 branches sont couplées les unes aux autres de manière magnétique, et **en ce que** des flux magnétiques apparaissant dans la branche m + 1 retournent dans les branches m de la bobine de choc de sortie.

6. Onduleur selon l'une quelconque des revendications précédentes,
**caractérisé en ce que** la branche m + 1 n'est traversée que par un courant d'harmonique.

7. Onduleur selon l'une quelconque des revendications précédentes,
**caractérisé en ce que** la bobine de choc de sortie est une bobine compensée en courant.

8. Onduleur selon l'une quelconque des revendications précédentes, dans le cadre duquel la bobine de choc de sortie est constituée d'une bobine de choc à quatre branches et d'une bobine à trois phases montée en série.

9. Onduleur selon l'une quelconque des revendications précédentes,
**caractérisé en ce que** le cercle intermédiaire de tension continue est stabilisé avec le circuit d'harmonique fermé.

10. Système produisant de l'énergie électrique, à savoir éolienne, comprenant un onduleur servant à produire un courant alternatif ou triphasé selon l'une quelconque des revendications précédentes.
